(19) Europäisches Patentamt
European Patent Office
Office européen des brevets

(11) **EP 3 759 008 B1**

(12) **EUROPÄISCHE PATENTSCHRIFT**

(45) Veröffentlichungstag und Bekanntmachung des Hinweises auf die Patenterteilung:
**17.01.2024 Patentblatt 2024/03**

(21) Anmeldenummer: **19709622.5**

(22) Anmeldetag: **26.02.2019**

(51) Internationale Patentklassifikation (IPC):
**B62D 13/06** *(2006.01)* **B60D 1/24** *(2006.01)*
**B62D 15/02** *(2006.01)* **G06T 7/60** *(2017.01)*

(52) Gemeinsame Patentklassifikation (CPC):
**B62D 15/023; B60D 1/06; B60D 1/62; B62D 13/06; B62D 15/027; G06T 7/60;** G06T 2207/30248

(86) Internationale Anmeldenummer:
**PCT/DE2019/200019**

(87) Internationale Veröffentlichungsnummer:
**WO 2019/166065 (06.09.2019 Gazette 2019/36)**

(54) **ANHÄNGERWINKELBESTIMMUNGSSYSTEM FÜR EIN FAHRZEUG**

TRAILER ANGLE DETERMINATION SYSTEM FOR A VEHICLE

SYSTÈME DE DÉFINITION D'ANGLE DE REMORQUE POUR UN VÉHICULE

(84) Benannte Vertragsstaaten:
**AL AT BE BG CH CY CZ DK EE ES FI FR GB GR HR HU IE IS IT LI LT LU LV MC MK MT NL NO PL PT RO RS SE SI SK SM TR**

(30) Priorität: **02.03.2018 DE 102018203152**

(43) Veröffentlichungstag der Anmeldung:
**06.01.2021 Patentblatt 2021/01**

(73) Patentinhaber: **Continental Autonomous Mobility Germany GmbH**
**85057 Ingolstadt (DE)**

(72) Erfinder:
• **SELENSKY, Denis**
**90411 Nürnberg (DE)**
• **KUBAN, Hauke**
**90411 Nürnberg (DE)**

(74) Vertreter: **Continental Corporation**
**c/o Continental Automotive GmbH**
**Intellectual Property**
**Nordostpark 30**
**90411 Nürnberg (DE)**

(56) Entgegenhaltungen:
**WO-A1-2017/123880 US-A1- 2010 265 048**

EP 3 759 008 B1

**Beschreibung**

Die Erfindung betrifft ein Anhängerwinkelbestimmungssystem für ein Fahrzeug, ein Fahrzeug mit einem solchen Anhängerwinkelbestimmungssystem, ein Verfahren zur Bestimmung des Winkels zwischen einem Fahrzeug und einem Anhänger, ein Programmelement und einem computerlesbaren Medium.

In modernen Fahrzeugen werden zunehmend Fahrerassistenzsysteme verbaut, um den Fahrer während des Fahrens zu unterstützen. Für viele Fahrer stellt das Fahren sowie das Rangieren mit einem Anhänger eine Herausforderung dar. Der Fahrer kann hierbei durch ein Fahrerassistenzsystem unterstützt werden. Insbesondere beim Rangieren kann der Fahrer durch das Fahrerassistenzsystem nützliche Informationen über das richtige Steuern des Fahrzeugs mit dem Anhänger erhalten. Hierbei kann der Winkel zwischen dem Fahrzeug und dem Anhänger entscheidend sein. Insbesondere wenn die Anhänger oft getauscht werden, beispielsweise in der Logistikbranche, muss der Winkel zwischen dem Anhänger und dem Fahrzeug durch ein solches Fahrerassistenzsystem schnell, einfach und verlässlich bestimmt werden.

WO 2017/123880 A1 beschreibt ein Verfahren zum Steuern eines Trägersystems für eine Fahrzeug- und Anhängeranordnung. Dabei wird ein Bild einer Anhängerkupplung für die Fahrzeug- und Anhängeranordnung mit einer an das Fahrzeug gekoppelten Kamera aufgezeichnet. Mit einem elektronischen Steuergerät werden mehrere Abstände in Bezug auf die Geometrie des Fahrzeugs und des Anhängers gelernt und eine Vielzahl von Referenzpunkten auf dem Anhänger identifiziert. Des Weiteren werden mit dem elektronischen Steuergerät mehrere Referenzabstände gelernt, die sich auf die Vielzahl von Referenzpunkten beziehen. Ein aktueller Kupplungswinkel wird sodann unter Verwendung der mehreren Referenzabstände und Geometrieabstände bestimmt.

Es ist eine Aufgabe der Erfindung, den Winkel zwischen einem Fahrzeug und einem Anhänger zu bestimmen.

Diese Aufgabe wird durch den Gegenstand der unabhängigen Ansprüche gelöst. Ausführungsformen und Weiterbildungen sind den abhängigen Ansprüchen, der Beschreibung und den Figuren zu entnehmen.

Ein erster Aspekt der Erfindung betrifft ein Anhängerwinkelbestimmungssystem. Das Anhängerwinkelbestimmungssystem weist eine Erfassungseinheit zur Erfassung eines mit dem Fahrzeug verbundenen Anhängers und eine Auswerteeinheit auf. Die Erfassungseinheit ist außerhalb der Mitte des Fahrzeugs und in Richtung des Anhängers angeordnet und der Abstand zwischen der Erfassungseinheit und der Mitte des Fahrzeugs ist bekannt. Der Anhänger weist symmetrische Merkmalspaare zu einer Längssymmetrieachse des Anhängers auf. Die Erfassungseinheit ist dazu eingerichtet, die symmetrischen Merkmalspaare des Anhängers zu erfassen und als solche zu identifizieren. Die Auswerteeinheit ist dazu eingerichtet, beispielsweise ausschließlich basierend auf den erfassten symmetrischen Merkmalspaaren des Anhängers und dem bekannten Abstand zwischen der Erfassungseinheit und der Mitte des Fahrzeugs den Winkel zwischen dem Anhänger und dem Fahrzeug zu bestimmen.

Das Anhängerwinkelbestimmungssystem kann den Winkel zwischen einem Fahrzeug und einem mit dem Fahrzeug verbundenen Anhänger bestimmen. Hierzu kann eine Erfassungseinheit außerhalb der Mitte des Fahrzeugs angeordnet sein, welche den Anhänger erfasst. Ferner kann der Anhänger zu einer Längssymmetrieachse des Anhängers symmetrische Merkmalspaare aufweisen. Die Merkmale der Merkmalspaare können Ecken, Kanten, Beleuchtungen, Reflektoren, Scharniere, Sicken, Nuten oder Aufnahmen des Anhängers sein, aber die Merkmale können auch speziell angebrachte Muster oder Objekte sein. Diese symmetrischen Merkmalspaare können durch die Auswerteeinheit derart ausgewertet werden, dass diese den Winkel zwischen dem Fahrzeug und dem Anhänger bestimmen kann. Ferner kann in einer Initialisierung, bei welcher der Winkel zwischen dem Fahrzeug und dem Anhänger 0° bzw. 180° ist, der Abstand zwischen dem Fahrzeug und dem jeweiligen Merkmalspaar des Anhängers bestimmt werden. Ferner kann die Erfassungseinheit den Winkel der Sichtlinien, der Winkel zwischen der Erfassungseinheit und dem jeweiligen Merkmal, zu der Hauptrichtung (parallel zur Mitte des Fahrzeugs) bestimmen. Mit anderen Worten, kann die Erfassungseinheit die Richtung des Merkmals bestimmen. Diese Abstandsinformation kann in die Bestimmung des Winkels zwischen dem Fahrzeug und dem Anhänger miteinfließen. Insbesondere wie sich der Winkel der Sichtlinien der jeweiligen Merkmale aus Sicht der Erfassungseinheit durch die Drehung bzw. den Winkel zwischen dem Fahrzeug und dem Anhänger ändert. Die Initialisierung des Anhängerwinkelbestimmungssystems kann basierend auf einem Bild bzw. einem Frame durchgeführt werden, sodass ein langwieriges Training oder eine Verwendung von speziellen Markierungen entfallen kann. Hierdurch kann sich das vorhergehend und nachfolgend beschriebene Anhängerwinkelbestimmungssystem schnell an einen neuen Anhänger anpassen. Somit kann die Flexibilität des Systems erhöht werden.

Durch das oben und nachfolgend beschriebene Anhängerwinkelbestimmungssystem können schnell die Anhänger gewechselt werden, ohne dass ein langwieriges Einlernen erforderlich ist.

Der bestimmte Winkel zwischen dem Fahrzeug und dem Anhänger kann für die Steuerung eines Fahrzeugs mit einem Anhänger verwendet werden, insbesondere beim Rangieren. Alternativ oder zusätzlich kann, abhängig vom Winkel, dem Fahrer des Fahrzeugs ein Hinweis über das richtige Steuern des Fahrzeugs mit dem Anhänger gegeben werden. Das richtige Steuern eines Fahrzeugs mit Anhänger kann insbesondere beim Rangieren des Fahrzeugs mit Anhänger eine Rolle spielen.

Alternativ oder zusätzlich kann neben dem Anhänger auch der Winkel zwischen einem weiteren Fahrzeug, einem Wohnwagen, einem Pferdetransport oder einem Bootsanhänger und dem eigenen Fahrzeug bestimmt werden. Mit anderen Worten kann der Anhänger auch ein weiteres Fahrzeug sein, beispielsweise, wenn dieses abgeschleppt wird.

Es sei angemerkt, dass mit Mitte des Fahrzeugs die Längsachse des Fahrzeugs gemeint ist, welche ebenfalls eine Längssymmetrieachse sein kann. Die Mitte des Fahrzeugs kann als Referenz dienen, wenn sich die Anhängerkupplung mittig am Fahrzeug befindet. Ferner sei angemerkt, dass im Allgemeinen die Erfassungseinheit gezielt außerhalt der Längsachse der Anhängerkupplung angeordnet ist. Somit muss es sich nicht zwingend im die Mitte des Fahrzeugs handeln, sondern die Erfassungseinheit kann außerhalb der Längssymmetrieachse des Anhängers angeordnet sein, wenn der Winkel zwischen Anhänger und Fahrzeug 0° bzw. 180° beträgt.

Gemäß einer Ausführungsform der Erfindung ist die Erfassungseinheit eine Mono-Kamera, welche Bilddaten des Anhängers erfasst.

Die Erfassungseinheit kann aus einer Kamera bestehen, welche auf Basis eines Bildes eine Initialisierung durchführt. Eine Stereo-Kamera oder weitere Sensoren sind für diese Erfindung nicht nötig. Die Bilddaten des Anhängers können symmetrische Merkmale des Anhängers aufweisen, sodass eine sichere Ermittlung des Winkels zwischen dem Fahrzeug und dem Anhänger möglich ist.

Gemäß einer Ausführungsform der Erfindung ist die Auswerteeinheit dazu eingerichtet, wenigstens zwei Merkmalspaare, welche symmetrisch zur Längssymmetrieachse des Anhängers sind, in den Bilddaten der Erfassungseinheit zu bestimmen und basierend auf den erfassten Merkmalspaaren den Winkel zwischen Anhänger und Fahrzeug zu bestimmen.

Für eine verlässliche Bestimmung des Winkels zwischen dem Fahrzeug und dem Anhänger kann die Auswerteeinheit wenigstens zwei zur Längssymmetrieachse des Anhängers symmetrische Merkmalspaare erfassen bzw. bestimmen. Durch die jeweilige Veränderung des Winkels der Sichtlinien der Erfassungseinheit, also unter welchem Winkel das jeweilige Merkmal des Merkmalspaars durch die Erfassungseinheit erfasst wurde, kann die Auswerteeinheit den Winkel zwischen dem Fahrzeug und dem Anhänger bestimmen. Mit anderen Worten kann die Auswerteeinheit bestimmen um wieviel sich der Anhänger gegenüber dem Fahrzeug gedreht hat. Alternativ oder zusätzlich kann der Auswerteeinheit der Drehpunkt, z.B. die Anhängerkupplung, und deren Abstand zu dem Fahrzeug bekannt sein. Dadurch kann die Bestimmung des Winkels zwischen dem Fahrzeug und dem Anhänger vereinfacht werden, da der Drehpunkt bekannt ist. Ferner kann der Abstand zwischen dem Drehpunkt (z.B. eine Anhängerkupplung) und dem Fahrzeug einmal durch das Anhängerwinkelbestimmungssystem bestimmt werden, da sich dieser Abstand für ein bestimmtes Fahrzeug nicht ändert.

Hierzu kann die Veränderung des Winkels der jeweiligen Sichtlinie der einzelnen Merkmale der wenigstens zwei Merkmalspaare herangezogen werden. In einer durchgeführten Initialisierung kann der Abstand zwischen dem Merkmal und der Erfassungseinheit bei einem Winkel von 0° bzw. 180° bestimmt werden.

Gemäß einer weiteren Ausführungsform der Erfindung ist die Auswerteeinheit dazu eingerichtet, den Abstand zwischen Anhänger und Fahrzeug basierend auf dem Abstand zwischen der Erfassungseinheit und der Mitte des Fahrzeugs und den Positionen der wenigstens zwei symmetrischen Merkmalspaare des Anhängers in den Bilddaten zu bestimmen.

Der Abstand zwischen dem Fahrzeug und dem Anhänger kann mittels der erkannten Merkmalspaare und dem bekannten Abstand zwischen der Erfassungseinheit und der Mitte des Fahrzeugs bestimmt werden, wenn die Mitte des Fahrzeugs und die Längssymmetrieachse des Anhängers sich in einer Linie befinden. Mit anderen Worten wenn die Winkel zwischen dem Fahrzeug und dem Anhänger 0° bzw. 180° ist.

Gemäß einer Ausführungsform der Erfindung wird der Abstand zwischen Fahrzeug und Anhänger gemäß dieser Formel berechnet:

$$x = \frac{2y_c}{\tan \alpha_r - \tan \alpha_l}$$

wobei x der Abstand zwischen Fahrzeug und Anhänger ist, $y_c$ ist der Abstand zwischen Erfassungseinheit und Mitte des Fahrzeugs, und $\alpha_r$ und $\alpha_l$ sind die Winkel der Merkmale des Merkmalspaars in Bezug auf die Hauptsichtachse der Erfassungseinheit.

Die obere Formel kann durch Umformung und durch verschiedene Annahmen hergeleitet werden. Der Abstand zwischen den beiden symmetrischen Merkmalen eines Merkmalpaares zu der Längssymmetrieachse des Anhängers kann gleich sein, beispielsweise $y_r$ und $y_l$, wobei der Abstand $y_1$ zwischen den Merkmalen des Merkmalspaar sein kann, woraus folgt, dass $0{,}5*y_1$ gleich ist zu $y_r$ und $y_l$. Ferner können zwei rechtwinklige Dreiecke definiert werden, wobei das erste rechtwinklige Dreieck das erste Merkmal des Merkmalspaars beinhaltet und das zweite rechtwinklige Dreieck das zweite Merkmal des Merkmalspaars beinhaltet. Durch die Anordnung der Erfassungseinheit in einem bekannten Abstand $y_c$ zu der Mitte des Fahrzeugs kann die Länge der Gegenkathete des ersten rechtwinkligen Dreiecks als $y_l+y_c$ bzw. als $0{,}5*y_1+y_c$ beschrieben werden und die Länge der Gegenkathete des zweiten rechtwinkligen Dreiecks kann als $y_r-y_c$ bzw. als $0{,}5*y_1-y_c$ beschrieben werden. Die Länge der Ankathete des ersten rechtwinkligen Dreiecks und die Länge der Ankathete des zweiten rechtwinkligen Dreiecks sind identisch und entsprechen dem Abstand x zwischen dem Fahrzeug und dem Merkmal des Anhängers. Der Winkel der Sichtlinie zwischen der Erfassungseinheit und dem jeweiligen Merkmal kann als $\alpha_r$ bzw. $\alpha_l$ bezeichnet werden und diese können direkt durch die Erfassungseinheit bestimmt werden. Ferner gilt, dass $0{,}5 \cdot y_1 + y_c$ gleich $x \cdot \tan(\alpha_l)$ ist und $0{,}5 \cdot y_1 - y_c$ gleich $x \cdot \tan(\alpha_r)$ ist. Des Weiteren gilt durch die Symmetrie der Merkmale, dass $0{,}5 \cdot y_1$ gleich $x \cdot \tan(\alpha_l) - y_c$ und gleichzeitig gleich $x \cdot \tan(\alpha_r) + y_c$ ist. Somit können diese beiden Formeln für $0{,}5 \cdot y_1$ gleichgesetzt werden und derart nach x umgestellt werden, dass

$$x = \frac{2y_c}{\tan\alpha_r - \tan\alpha_l}$$

gilt. Somit kann der Abstand x zwischen dem Fahrzeug und dem Anhänger abhängig von dem bekannten Abstand $y_c$ zwischen der Erfassungseinheit und der Mitte des Fahrzeugs und den bekannten Winkeln $\alpha_r$ und $\alpha_l$, unter welchen das erste Merkmalspaar durch die Erfassungseinheit erfasst wurde, bestimmt werden.

Erfindungsgemäß ist die Auswerteeinheit dazu eingerichtet, den Abstand zwischen Fahrzeug und Anhänger durch eine Initialisierung basierend auf einem Bild zu bestimmen, in welcher die Mitte des Fahrzeugs und die Längssymmetrieachse des Anhängers in einer Linie.

Bei der Initialisierung des Anhängerwinkelbestimmungssystems kann der Abstand zwischen dem Fahrzeug und dem Anhänger bzw. den Merkmalen der Merkmalspaare des Anhängers bestimmt werden, dieser kann als Ausgangsbasis für die spätere Bestimmung des Winkels zwischen dem Fahrzeug und dem Anhänger dienen. Dieser Abstand kann bestimmt werden, wenn die Längssymmetrieachse des Anhängers gleich der Mitte des Fahrzeugs ist, da dann hier der Abstand zwischen den beiden Merkmalen des Merkmalspaars und dem Fahrzeug gleich ist. Mit anderen Worten kann die Initialisierung durchgeführt werden, wenn der Winkel zwischen dem Fahrzeug und dem Anhänger 0° bzw. 180° beträgt.

Ein weiterer Aspekt der Erfindung betrifft ein Fahrzeug mit einem vorhergehend und nachfolgend beschriebenen Anhängerwinkelbestimmungssystem.

Bei dem Fahrzeug handelt es sich beispielsweise um ein Kraftfahrzeug, wie ein Auto, ein Bus oder einen Lastkraftwagen.

Ein weiterer Aspekt der Erfindung betrifft ein Verfahren zur Bestimmung des Winkels zwischen einem Fahrzeug und einem mit dem Fahrzeug verbundenen Anhänger. Das Verfahren weist die folgenden Schritte auf:

- Erfassen des Anhängers durch eine Erfassungseinheit, welche außerhalb der Mitte des Fahrzeugs in Richtung des Anhängers angeordnet ist;

- Bestimmen des Abstands zwischen der Erfassungseinheit und einer Mitte des Fahrzeugs;

- Erfassen von zur Längssymmetrieachse des Anhängers symmetrischen Merkmalen;

- Bestimmen des Abstandes zwischen dem Fahrzeug und dem Anhänger, wenn die Längssymmetrieachse des Anhängers und die Mitte des Fahrzeugs in einer Linie sind; und

- Bestimmen des Winkels zwischen dem Fahrzeug und dem Anhänger basierend auf den symmetrischen Merkmalen des Anhängers und dem bekannten Abstand zwischen Erfassungseinheit und der Mitte des Fahrzeugs.

Es sei angemerkt, dass die Schritte des Verfahrens auch in einer anderen Reihenfolge oder gleichzeitig ausgeführt werden können. Ferner kann zwischen einzelnen Schritten auch eine längere Zeitspanne liegen.

Ein weiterer Aspekt der Erfindung betrifft ein Programmelement, das, wenn es auf eine Auswerteeinheit eines

Anhängerwinkelbestimmungssystems ausgeführt werden, die Auswerteeinheit anleitet, das vorhergehend und nachfolgend beschriebene Verfahren durchzuführen.

Ein weiterer Aspekt der Erfindung betrifft ein computerlesbares Medium, auf dem ein Programmelement gespeichert ist, das, wenn es auf eine Auswerteeinheit eines Anhängerwinkelbestimmungssystems, die Auswerteeinheit anleitet, das vorhergehend und nachfolgend beschriebene Verfahren durchzuführen.

Weitere Merkmale, Vorteile und Anwendungsmöglichkeiten der Erfindung ergeben sich aus der nachfolgenden Beschreibung der Ausführungsbeispiele und der Figuren.

Die Figuren sind schematisch und nicht maßstabsgetreu. Sind in der nachfolgenden Beschreibung der Figuren gleiche Bezugszeichen angegeben, so bezeichnen diese gleiche oder ähnliche Elemente.

Fig. 1 zeigt ein Blockschaltbild eines Anhängerwinkelbestimmungssystems gemäß einer Ausführungsform der Erfindung.

Fig. 2 zeigt eine schematische Darstellung eines Fahrzeugs mit einem Anhängerwinkelbestimmungssystem und einem Anhänger gemäß einer Ausführungsform der Erfindung.

Fig. 3 zeigt eine schematische Darstellung der durch das Anhängerwinkelbestimmungssystem erkannten Merkmale des Anhängers gemäß einer Ausführungsform der Erfindung.

Fig. 4 zeigt eine schematische Darstellung der Berechnung des Abstandes zwischen dem Fahrzeug und dem Anhänger gemäß einer Ausführungsform der Erfindung.

Fig. 5 zeigt eine schematische Darstellung der möglichen Positionen der Merkmale des Anhängers aus Sicht des Anhängerwinkelbestimmungssystems gemäß einer Ausführungsform der Erfindung.

Fig. 6 zeigt das Anhängerwinkelbestimmungssystem welches den Winkel zwischen dem Fahrzeug und dem Anhänger bestimmt hat, gemäß einer Ausführungsform der Erfindung.

Fig. 7 zeigt ein Fahrzeug mit einem Anhängerwinkelbestimmungssystem gemäß einer Ausführungsform der Erfindung.

Fig. 8 zeigt ein Flussdiagramm für ein Verfahren zur Bestimmung eines Winkels zwischen einem Fahrzeug und einem Anhänger gemäß einer Ausführungsform der Erfindung.

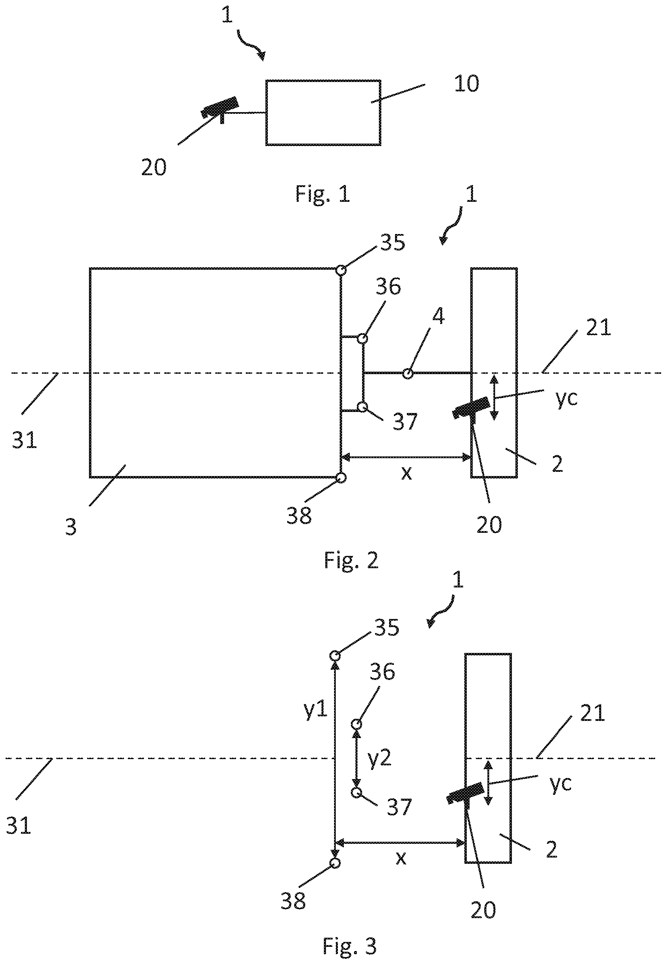

Fig. 1 zeigt eine Blockschaltbild eines Anhängerwinkelbestimmungssystems 1. Das Anhängerwinkelbestimmungssystem 1 weist eine Erfassungseinheit 20 und eine Auswerteeinheit 10 auf. Die Erfassungseinheit 20 ist dazu ausgeführt Bilddaten eines Anhängers, welcher mit dem Fahrzeug des Anhängerwinkelbestimmungssystems 1 verbunden ist, zu erfassen. Des Weiteren weist der Anhänger zu einer Längssymmetrieachse des Anhängers symmetrische Merkmalspaare auf. Ferner ist die Erfassungseinheit 20 außerhalb der Mitte des Fahrzeugs angeordnet und weist eine zur Mitte des Fahrzeugs parallele Ausrichtung auf. Die Auswerteeinheit 10 kann basierend auf den erfassten Bilddaten der Erfassungseinheit 20 und dem bekannten Abstand zwischen Erfassungseinheit 20 und der Mitte des Fahrzeugs den Winkel zwischen dem Fahrzeug und dem Anhänger bestimmen. Ferner kann die Erfassungseinheit 20, entlang der Sichtlinie der Erfassungseinheit 20, den Winkel bestimmen in welchem sich ein Objekt bzw. ein Merkmal zu der Erfassungseinheit befindet. Für die Kalibrierung benötigt dieses Anhängerwinkelbestimmungssystem 1 lediglich ein Bild bzw. einen Frame der Erfassungseinheit 20, bei welchem die Mitte des Fahrzeugs und die Längssymmetrieachse des Anhängers in einer Linie sind. Hierdurch kann der Abstand zwischen dem Fahrzeug und dem Anhänger bzw. den Merkmalen des Merkmalspaars des Anhängers bestimmt werden.

Fig. 2 zeigt eine schematische Darstellung des Anhängerwinkelbestimmungssystems an einem Fahrzeug 2. Hierzu ist eine Erfassungseinheit 20, z.B. eine Kamera, an dem Fahrzeug 2 angeordnet. Das Fahrzeug 2 weist eine Mitte 21 (Längsachse des Fahrzeugs) auf (als gestrichelte Linie dargestellt). Die Erfassungseinheit ist gezielt außerhalb dieser Mitte 21 des Fahrzeugs 2 in dem Abstand $y_c$ angeordnet. Ferner ist ein Anhänger 3 mit dem Fahrzeug über eine drehbare Kupplung 4 verbunden. Der Anhänger weist ebenfalls eine Längssymmetrieachse 31 auf (als gestrichelte Linie dargestellt). Der Abstand zwischen dem Fahrzeug und dem Anhänger wird als x bezeichnet. Der Anhänger 3 weist zu seiner Längssymmetrieachse 31 symmetrische Merkmale 35, 36, 37, 38 auf. Diese Merkmale 35, 36, 37, 38 werden jeweils paarweise 35, 38; 36, 37 zur Bestimmung des Winkels zwischen dem Fahrzeug 2 und dem Anhänger 3 verwendet. Des Weiteren kann die Erfassungseinheit 20 die symmetrischen Merkmale 35, 36, 37, 38 des Anhängers 3 erfassen und die Auswerteeinheit kann diese derart auswerten, dass der Winkel zwischen dem Fahrzeug 2 und dem Anhänger 3 bestimmt werden kann. Der Winkel ist hierbei der Winkel zwischen der Längsachse bzw. der Mitte 21 des Fahrzeugs 2 und der Längssymmetrieachse 31 des Anhängers 3.

Fig. 3 zeigt ebenfalls eine schematische Darstellung des Anhängerwinkelbestimmungssystems. Im Unterschied zu Fig. 2 wurde aus Gründen der Übersichtlichkeit der Anhänger und die Kupplung zwischen dem Anhänger und dem Fahrzeug 2 entfernt. Des Weiteren ist der Abstand $y_1$ zwischen dem ersten Merkmalspaar 35, 38 und der Abstand $y_2$ zwischen dem zweiten Merkmalspaar 36, 37 dargestellt. Hierbei ist festzuhalten, dass der Abstand zwischen der Längssymmetrieachse 31 des Anhängers und den Merkmalen des ersten Merkmalspaars 35, 38 gleich ist und $0{,}5 \cdot y_1$ beträgt. Ferner ist der Abstand zwischen der Längssymmetrieachse 31 des Anhängers und den Merkmalen des zweiten Merkmalspaars 36, 37 gleich und beträgt $0{,}5 \cdot y_2$.

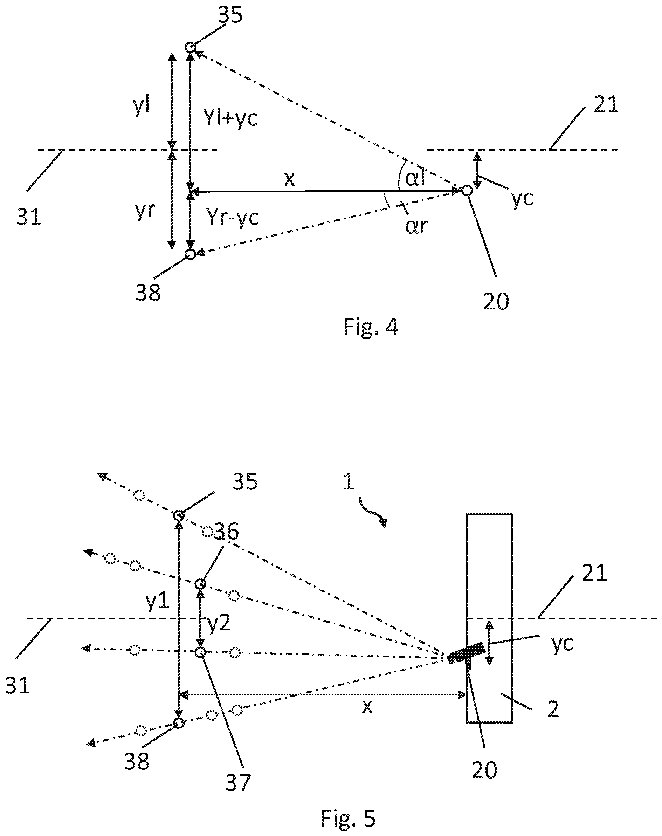

Fig. 4 zeigt eine schematische Ansicht der Bestimmung des Abstands zwischen dem Fahrzeug und dem Anhänger, wenn die Mitte 21 des Fahrzeugs und die Längssymmetrieachse 31 des Anhängers gleich sind. Hierzu wird in diesem Fall ein Bild bzw. ein Frame mit symmetrischen Merkmalspaaren des Anhängers benötigt. Die Erfassungseinheit 20 ist hierbei gezielt außerhalb der Mitte 21 des Fahrzeugs angeordnet und der Abstand $y_c$ zwischen der Mitte 21 des Fahrzeugs und der Erfassungseinheit 20 ist bekannt. Des Weiteren ist der Winkel $\alpha l$, $\alpha r$ durch die Erfassungseinheit 20 bekannt, unter welchem die Bilddaten der jeweiligen symmetrischen Merkmale des Merkmalspaars empfangen werden. Die Erfassungseinheit 20 erfasst wenigstens ein symmetrisches Merkmalspaar 35, 38 des Anhängers. Hierbei ist der Abstand $y_l$, $y_r$ zwischen dem jeweiligen Merkmal 35, 38 und der Längssymmetrieachse 31 des Anhängers identisch und entspricht jeweils $0{,}5 \cdot y_1$. Nun können zwei rechtwinklige Dreiecke aus Sicht der Erfassungseinheit 20 gebildet werden. Das erste rechtwinklige Dreieck umfasst das erste Merkmal 35 des ersten Merkmalspaars 35, 38 und den Abstand x zwischen dem Fahrzeug und dem Anhänger und das zweite rechtwinklige Dreieck umfasst das zweite Merkmal 38 des ersten Merkmalspaars 35, 38 und den Abstand x. Durch die Anordnung der Erfassungseinheit 20 in einem Abstand $y_c$ zu der Mitte 21 des Fahrzeugs kann die Länge der Gegenkathete des ersten rechtwinkligen Dreiecks als $y_1 + y_c$ bzw. als $0{,}5 \cdot y_1 + y_c$ beschrieben werden und die Länge der Gegenkathete des zweiten rechtwinkligen Dreiecks kann als $y_r$-$y_c$ bzw. als $0,5*y_1$-$y_c$ beschrieben werden. Die Länge der Ankathete des ersten rechtwinkligen Dreiecks und die Länge die Ankathete des zweiten rechtwinkligen Dreiecks sind identisch und entsprechen dem Abstand x zwischen dem Fahrzeug und dem Anhänger. Ferner gilt, dass $0,5*y_1$+$y_c$ gleich $x*\tan(\alpha_l)$ ist und $0,5*y_1$-$y_c$ gleich $x*\tan(\alpha_r)$ ist. Auch gilt durch die Symmetrie der Merkmale 35, 38, dass $0,5*y_1$ gleich $x*\tan(\alpha_l)$-$y_c$ und gleichzeitig gleich $x*\tan(\alpha_r)$+$y_c$ ist. Somit können diese beiden Formeln für $0,5*y_1$ gleichgesetzt werden und derart nach x umgestellt werden, dass

$$x = \frac{2y_c}{\tan \alpha_r - \tan \alpha_l}$$

gilt. Somit kann der Abstand x zwischen dem Fahrzeug und dem Anhänger abhängig von dem bekannten Abstand $y_c$ zwischen der Erfassungseinheit und der Längssymmetrieachse des Anhängers und den bekannten Winkeln, unter welchen das erste Merkmalspaar 35, 38 durch die Erfassungseinheit 20 erfasst wurde, bestimmt werden.

Fig. 5 zeigt eine schematische Darstellung der korrekten Abstandsbestimmung der einzelnen Merkmalspaare 35, 38; 36, 37. Hierbei symbolisieren die gepunkteten Kreise die Möglichen Positionen der Merkmale aus Sicht der Erfassungseinheit 20 entlang der Sichtlinien der Erfassungseinheit 20. Diese können sich an einer beliebigen Position entlang der Sichtlinie (gestrichelter Pfeil ausgehend von der Erfassungseinheit 20) befinden. Die durchgezogenen Kreise symbolisieren die tatsächlichen Positionen der Merkmale 35, 36, 37, 38 des Anhängers 3. Die tatsächliche Position der jeweiligen Merkmalspaare 35, 38; 36, 37 kann über die Methode, welche anhand Fig. 4 beschrieben wurde, bestimmt werden. Mit den bestimmten Positionen der symmetrischen Merkmalspaare 35, 38; 36, 37 während der Initialisierung kann anschließend während des Betriebs des Anhängerwinkelbestimmungssystems der Winkel zwischen dem Fahrzeug 2 und dem Anhänger 3 bestimmt werden.

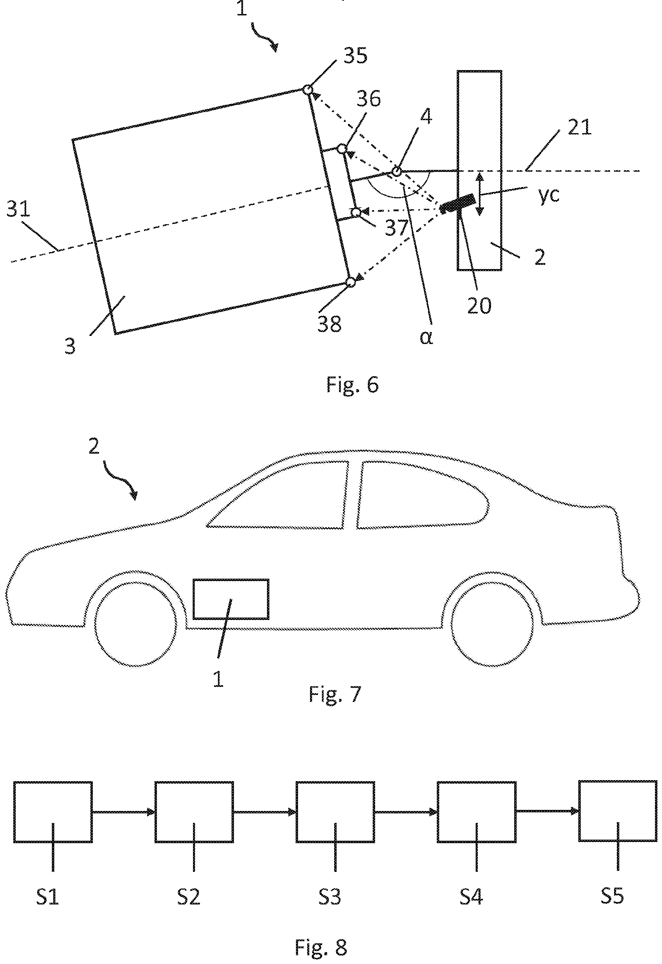

Fig. 6 zeigt das Anhängerwinkelbestimmungssystem während des Betriebs. Der Winkel $\alpha$ zwischen dem Fahrzeug 2 und dem Anhänger 3 ist hier ungleich 0° bzw. 180°, wobei sich der Anhänger 3 um die Kupplung 4 gedreht hat. Die symmetrischen Merkmalspaare 35, 38; 36, 37 ändern durch die Drehung den Winkel der Sichtlinie zwischen dem jeweiligen Merkmal 35, 36, 37, 38 und der Erfassungseinheit 20. Durch die Winkeländerung der Sichtlinie der wenigstens zwei symmetrischen Merkmalspaare 35, 38; 36, 37 und dem vorher bekannten Abstand x zwischen dem Fahrzeug 2 und dem Anhänger 3 kann durch die Auswerteeinheit auf den Winkel $\alpha$ zwischen dem Fahrzeug 2 und dem Anhänger 3 geschlossen werden. In einer weiteren Ausführungsform kann ferner die Position der Kupplung 4 und somit des Drehpunktes bekannt sein, wodurch sich die Berechnung des Winkels $\alpha$ zwischen dem Fahrzeug 2 und dem Anhänger 3 vereinfacht.

Fig. 7 zeigt ein Fahrzeug 2 mit einem vorhergehend und nachfolgend beschriebenen Anhängerwinkelbestimmungssystem 1.

Fig. 8 zeigt ein Flussdiagramm für ein Verfahren zur Bestimmung des Winkels zwischen einem Fahrzeug und einem mit dem Fahrzeug verbundenen Anhänger. In Schritt S1 wird der Anhänger durch die Erfassungseinheit erfasst, die Erfassungseinheit ist hierbei außerhalb der Mitte in Richtung des Anhängers angeordnet. In Schritt 2 wird der Abstand zwischen der Erfassungseinheit und der Mitte des Fahrzeugs bestimmt. In Schritt S3 werden durch die Auswerteeinheit zur Längssymmetrieachse des Anhängers symmetrische Merkmale des Anhängers erfasst. In Schritt S4 wird der Abstand zwischen dem Fahrzeug und dem Anhänger bestimmt, wenn die Mitte des Fahrzeugs und die Längssymmetrieachse des Anhängers in einer Linie sind. In Schritt 5 wird der Winkel zwischen dem Fahrzeug und dem Anhänger basierend auf den symmetrischen Merkmalen des Anhängers und dem Bekannten Abstand zwischen Erfassungseinheit und der Mitte des Fahrzeugs, sowie dem bestimmten Abstand zwischen dem Fahrzeug und dem Anhänger, bestimmt.

## Patentansprüche

1. Anhängerwinkelbestimmungssystem (1) für ein Fahrzeug (2), aufweisend:

    - eine Erfassungseinheit (20) zur Erfassung eines mit dem Fahrzeug (2) verbundenen Anhängers (3); und
    - eine Auswerteeinheit (10),
wobei die Erfassungseinheit (20) außerhalb der Mitte (21) des Fahrzeugs (2) und in Richtung des Anhängers (3) angeordnet ist und wobei der Abstand (yc) zwischen der Erfassungseinheit (20) und der Mitte (21) des Fahrzeugs (2) bekannt ist,
wobei der Anhänger (3) symmetrische Merkmalspaare (35, 38; 36, 37) zu einer Längssymmetrieachse (31) des Anhängers (3) aufweist,
wobei die Erfassungseinheit (20) dazu eingerichtet ist, zumindest die symmetrischen Merkmalspaare (35, 38; 36, 37) des Anhängers (3) zu erfassen,
wobei die Auswerteeinheit (10) dazu eingerichtet ist, basierend auf den erfassten symmetrischen Merkmalspaaren (35, 38; 36, 37) des Anhängers (3) und dem bekannten Abstand (yc) zwischen der Erfassungseinheit (20) und der Mitte (21) des Fahrzeugs (2) den Winkel ($\alpha$) zwischen dem Anhänger (3) und dem Fahrzeug (2) zu bestimmen,

**dadurch gekennzeichnet,**

**dass** die Auswerteeinheit (10) dazu eingerichtet ist, den Abstand (x) zwischen dem Fahrzeug (2) und dem Anhänger (3) durch eine Initialisierung basierend auf einem Bild zu bestimmen, in welcher die Mitte (21) des Fahrzeugs (2) und die Längssymmetrieachse (31) des Anhängers (3) in einer Linie sind.

2. Anhängerwinkelbestimmungssystem (1) gemäß Anspruch 1, wobei die Erfassungseinheit (20) eine Mono-Kamera ist und Bilddaten des Anhängers (3) erfasst.

3. Anhängerwinkelbestimmungssystem (1) gemäß Anspruch 2, wobei die Auswerteeinheit (10) dazu eingerichtet ist, wenigstens zwei Merkmalspaare (35, 38; 36, 37), welche symmetrisch zur Längssymmetrieachse (31) des Anhängers (3) sind, in den Bilddaten der Erfassungseinheit (20) zu bestimmen und basierend auf den erfassten Merkmalspaaren (35, 38; 36, 37) den Winkel zwischen dem Anhänger (3) und dem Fahrzeug (2) zu bestimmen.

4. Anhängerwinkelbestimmungssystem (1) gemäß einem der vorhergehenden Ansprüche, wobei die Auswerteeinheit (10) dazu eingerichtet ist, den Abstand (x) zwischen dem Anhänger (3) und dem Fahrzeug (2) basierend auf dem Abstand (yc) zwischen der Erfassungseinheit (20) und der Mitte (21) des Fahrzeugs und den Positionen der wenigstens zwei symmetrischen Merkmalspaare (35, 38; 36, 37) des Anhängers (3) in den Bilddaten zu bestimmen.

5. Anhängerwinkelbestimmungssystem (1) gemäß Anspruch 4, wobei der Abstand (x) zwischen dem Fahrzeug (2) und dem Anhänger (3) gemäß dieser Formel berechnet wird:

$$x = \frac{2y_c}{\tan \alpha_r - \tan \alpha_l}$$

wobei x der Abstand zwischen Fahrzeug und Anhänger ist, $y_c$ ist der Abstand zwischen Erfassungseinheit und Mitte des Fahrzeugs, und $\alpha_r$ und $\alpha_l$ sind die Winkel der Merkmale des Merkmalspaars in Bezug auf die Hauptsichtachse der Erfassungseinheit.

6. Fahrzeug (2) mit einem Anhängerwinkelbestimmungssystem (1) gemäß einem der Ansprüche 1 bis 5.

7. Verfahren zur Bestimmung des Winkels zwischen einem Fahrzeug und einem mit dem Fahrzeug verbundenen Anhänger, folgende Schritte aufweisend:

- Erfassen (S1) des Anhängers durch eine Erfassungseinheit, welche außerhalb der Mitte des Fahrzeugs in Richtung des Anhängers angeordnet ist;
- Bestimmen (S2) des Abstands zwischen der Erfassungseinheit und einer Mitte des Fahrzeugs;
- Erfassen (S3) von zur Längssymmetrieachse des Anhängers symmetrischen Merkmalspaaren;
- Bestimmen (S4) des Abstandes zwischen dem Fahrzeug und dem Anhänger, wenn die Längssymmetrieachse des Anhängers und die Mitte des Fahrzeugs in einer Linie sind; und
- Bestimmen (S5) des Winkels zwischen dem Fahrzeug und dem Anhänger basierend auf den symmetrischen Merkmalspaaren des Anhängers und dem bekannten Abstand zwischen Erfassungseinheit und der Mitte des Fahrzeugs.

8. Programmelement, welches, wenn durch eine Auswerteeinheit eines Anhängerwinkelbestimmungssystems ausgeführt, die Auswerteeinheit dazu anleitet, das Verfahren gemäß Anspruch 7 durchzuführen.

9. Computerlesbares Medium, auf welchem ein Programmelement gemäß Anspruch 8 gespeichert ist.

**Claims**

1. Trailer angle determination system (1) for a vehicle (2), having:

- a sensing unit (20) for sensing a trailer (3) connected to the vehicle (2); and
- an evaluation unit (10),

wherein the sensing unit (20) is arranged outside the centre (21) of the vehicle (2) and in the direction of the trailer (3), and wherein the distance (yc) between the sensing unit (20) and the centre (21) of the vehicle (2) is known, wherein the trailer (3) has symmetrical feature pairs (35, 38; 36, 37) with respect to a longitudinal axis of symmetry (31) of the trailer (3), wherein the sensing unit (20) is configured to sense at least the symmetrical feature pairs (35, 38; 36, 37) of the trailer (3), wherein the evaluation unit (10) is configured to determine the angle (α) between the trailer (3) and the vehicle (2) on the basis of the sensed symmetrical feature pairs (35, 38; 36, 37) of the trailer (3) and the known distance (yc) between the sensing unit (20) and the centre (21) of the vehicle (2),

**characterized**

**in that** the evaluation unit (10) is configured to determine the distance (x) between the vehicle (2) and the trailer (3) by means of an initialization based on an image, in which the centre (21) of the vehicle (2) and the longitudinal axis of symmetry (31) of the trailer (3) are in a line.

2. Trailer angle determination system (1) according to Claim 1,
wherein the sensing unit (20) is a mono-camera and acquires image data relating to the trailer (3).

3. Trailer angle determination system (1) according to Claim 2,
wherein the evaluation unit (10) is configured to determine at least two feature pairs (35, 38; 36, 37), which are symmetrical with respect to the longitudinal axis of symmetry (31) of the trailer (3), in the image data from the sensing unit (20) and to determine the angle between the trailer (3) and the vehicle (2) on the basis of the sensed feature pairs (35, 38; 36, 37).

4. Trailer angle determination system (1) according to one of the preceding claims,
wherein the evaluation unit (10) is configured to determine the distance (x) between the trailer (3) and the vehicle (2) on the basis of the distance (yc) between the sensing unit (20) and the centre (21) of the vehicle and the positions of the at least two symmetrical feature pairs (35, 38; 36, 37) of the trailer (3) in the image data.

5. Trailer angle determination system (1) according to Claim 4, wherein the distance (x) between the vehicle (2) and the trailer (3) is calculated according to this formula:

$$x = \frac{2y_c}{\tan \alpha_r - \tan \alpha_l}$$

where x is the distance between the vehicle and the trailer, $y_c$ is the distance between the sensing unit and the centre of the vehicle, and $\alpha_r$ and $\alpha_l$ are the angles of the features in the feature pair with respect to the main sight axis of the sensing unit.

6. Vehicle (2) having a trailer angle determination system (1) according to one of Claims 1 to 5.

7. Method for determining the angle between a vehicle and a trailer connected to the vehicle, having the following steps:

- sensing (S1) the trailer by means of a sensing unit which is arranged outside the centre of the vehicle in the direction of the trailer;
- determining (S2) the distance between the sensing unit and a centre of the vehicle;
- sensing (S3) feature pairs which are symmetrical with respect to the longitudinal axis of symmetry of the trailer;
- determining (S4) the distance between the vehicle and the trailer if the longitudinal axis of symmetry of the trailer and the centre of the vehicle are in a line; and
- determining (S5) the angle between the vehicle and the trailer on the basis of the symmetrical feature pairs of the trailer and the known distance between the sensing unit and the centre of the vehicle.

8. Program element which, when executed by an evaluation unit of a trailer angle determination system, instructs the evaluation unit to carry out the method according to Claim 7.

9. Computer-readable medium on which a program element according to Claim 8 is stored.

**Revendications**

1. Système de détermination d'angle de remorque (1) destiné à un véhicule (2), ledit système comportant :

- une unité de détection (20) destinée à détecter une remorque (3) reliée au véhicule (2); et
- une unité d'évaluation (10),
l'unité de détection (20) étant disposée en dehors du centre (21) du véhicule (2) et en direction de la remorque (3) et la distance (yc) entre l'unité de détection (20) et le centre (21) du véhicule (2) étant connue,
la remorque (3) comportant des paires d'éléments caractéristiques symétriques (35, 38 ; 36, 37) par rapport à un axe de symétrie longitudinal (31) de la remorque (3),
l'unité de détection (20) étant conçue pour détecter au moins les paires d'éléments caractéristiques symétriques (35, 38 ; 36, 37) de la remorque (3),
l'unité d'évaluation (10) étant conçue pour déterminer l'angle ($\alpha$) entre la remorque (3) et le véhicule (2) sur la base des paires d'éléments caractéristiques symétriques détectées (35, 38 ; 36, 37) de la remorque (3) et de la distance connue (yc) entre l'unité de détection (20) et le centre (21) du véhicule (2),

**caractérisé en ce que**
l'unité d'évaluation (10) est conçue pour déterminer la distance (x) entre le véhicule (2) et la remorque (3) par initialisation sur la base d'une image, dans laquelle le centre (21) du véhicule (2) et les axes de symétrie longitudinaux (31) de la remorque (3) sont alignés.

2. Système de détermination d'angle de remorque (1) selon la revendication 1,
l'unité de détection (20) étant une caméra mono et détectant des données d'image de la remorque (3).

3. Système de détermination d'angle de remorque (1) selon la revendication 2,
l'unité d'évaluation (10) étant conçue pour déterminer au moins deux paires d'éléments caractéristiques (35, 38 ; 36, 37) qui sont symétriques par rapport à l'axe de symétrie longitudinal (31) de la remorque (3), dans les données d'image de l'unité de détection (20) et pour déterminer l'angle entre la remorque (3) et le véhicule (2) sur la base des paires d'éléments caractéristiques détectées (35, 38 ; 36, 37).

4. Système de détermination d'angle de remorque (1) selon l'une des revendications précédentes,
l'unité d'évaluation (10) étant conçue pour déterminer la distance (x) entre la remorque (3) et le véhicule (2) sur la base de la distance (yc) entre l'unité de détection (20) et le centre (21) du véhicule et des positions des au moins deux paires d'éléments caractéristiques symétriques (35, 38 ; 36, 37) de la remorque (3) dans les données d'image.

5. Système de détermination d'angle de remorque (1) selon la revendication 4, la distance (x) entre le véhicule (2) et la remorque (3) étant calculée d'après cette formule :

$$x = \frac{2y_c}{\tan \alpha_r - \tan \alpha_l}$$

x étant la distance entre le véhicule et la remorque, yc étant la distance entre l'unité de détection et le centre du véhicule, et $\alpha_r$ et $\alpha_1$ étant les angles des éléments caractéristiques de la paire d'éléments caractéristiques par rapport à l'axe d'observation principal de l'unité de détection.

6. Véhicule (2) équipé d'un système de détermination d'angle de remorque (1) selon l'une des revendications 1 à 5.

7. Procédé de détermination de l'angle entre un véhicule et une remorque reliée au véhicule, ledit procédé comportant les étapes suivantes :

- détecter (S1) la remorque par le biais d'une unité de détection qui est disposée en dehors du centre du véhicule en direction de la remorque ;
- déterminer (S2) la distance entre l'unité de détection et un centre du véhicule ;
- détecter (S3) des paires d'éléments caractéristiques symétriques par rapport à l'axe de symétrie longitudinal de la remorque ;
- déterminer (S4) la distance entre le véhicule et la remorque lorsque l'axe de symétrie longitudinal de la remorque et le centre du véhicule sont alignés ; et
- déterminer (S5) l'angle entre le véhicule et la remorque sur la base des paires d'éléments caractéristiques symétriques de la remorque et de la distance connue entre l'unité de détection et le centre du véhicule.

8. Élément de programme qui, lorsqu'il est exécuté par une unité d'évaluation d'un système de détermination d'angle de remorque, ordonne à l'unité d'évaluation de mettre en oeuvre le procédé selon la revendication 7.

9. Support lisible par ordinateur sur lequel est mémorisé un élément de programme selon la revendication 8.

Fig. 1

Fig. 2

Fig. 3

Fig. 4

Fig. 5

Fig. 6

Fig. 7

Fig. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2017123880 A1